# EUROPEAN PATENT APPLICATION

(11) **EP 4 804 325 A1**
(43) Date of publication of application: **09.09.2026**
(21) Application number: 25162258.5
(22) Date of filing: 07.03.2025
(51) Int. Cl.: H01M 50/572, H01M 50/576

(54) **SECURE ELEMENT AND OPERATING METHOD**

(71) Applicant: NXP B.V., 5656 AG Eindhoven (NL)
(72) Inventor: Haslinger, Dorian, 5656AG Eindhoven (NL); Manninger, Marc, 5656AG Eindhoven (NL); Khullar, Naman, 5656AG Eindhoven (NL)
(74) Representative: Krott, Michel

(57) **Abstract**

In accordance with a first aspect of the present disclosure, a secure element for use in a battery system is provided, the secure element comprising: a seal interface configured to couple the secure element to a seal included in the battery system, wherein the seal is configured to physically protect a battery unit of the battery system; a storage unit configured to store a reference value indicative of a closed state of the seal; a monitoring unit configured to monitor an electrical characteristic of the seal and to compare said electrical characteristic of the seal with the reference value. In accordance with a second aspect of the present disclosure, a corresponding method of operating a secure element is conceived.

## Description

### TECHNICAL FIELD

The present disclosure relates to a secure element. Furthermore, the present disclosure relates to a corresponding method of operating a secure element.

### BACKGROUND

Electric vehicles typically contain battery packs containing multiple battery modules or battery cells. It may be necessary to verify the integrity of these battery packs or modules, for example when they are installed or replaced. However, verifying the integrity of battery packs or modules may require additional components, such as sensors, and/or an online connection in case a server is accessed to obtain integrity data for a newly installed or replaced battery pack or module. Therefore, there may be a need to facilitate verifying the integrity of battery packs or modules for electric vehicles. A similar need may arise for battery packs or modules used in applications different from automotive applications.

### SUMMARY

In accordance with a first aspect of the present disclosure, a secure element for use in a battery system is provided, the secure element comprising: a seal interface configured to couple the secure element to a seal included in the battery system, wherein the seal is configured to physically protect a battery unit of the battery system; a storage unit configured to store a reference value indicative of a closed state of the seal; a monitoring unit configured to monitor an electrical characteristic of the seal and to compare said electrical characteristic of the seal with the reference value.

In one or more embodiments, the electrical characteristic is an impedance of the seal.

In one or more embodiments, the monitoring unit is further configured to register a first attack on the seal if the electrical characteristic of the seal differs from the reference value by more than a predefined threshold.

In one or more embodiments, the monitoring unit is further configured to register a second attack on the seal if a power supply to the secure element is interrupted for more than a predefined amount of time.

In one or more embodiments, the monitoring unit is further configured to unregister the second attack if a successful authentication has been performed towards the secure element.

In one or more embodiments, the storage unit is further configured to store, in response to the second attack having been unregistered, non-volatile data indicating that the second attack has been unregistered.

In one or more embodiments, the monitoring unit is further configured to learn the reference value during a training phase of the battery system before the reference value is stored in the storage unit.

In one or more embodiments, the secure element further comprises a near field communication (NFC) interface for connecting the secure element to an external user device.

In one or more embodiments, the seal interface comprises a first part coupled to a first end of the seal and a second part coupled to a second end of the seal, and the monitoring unit is configured to monitor the electrical characteristic of the seal by measuring currents on the first part and second part of the seal interface, wherein said currents are measured over shunt resistors.

In one or more embodiments, the secure element is implemented as a tamper-resistant integrated circuit.

In one or more embodiments, the secure element is embedded within the battery unit of the battery system.

In one or more embodiments, a battery system comprises a secure element of the kind set forth, a seal and a battery unit, wherein the battery system further comprises a microcontroller, and wherein the secure element comprises a wired interface for connecting the secure element to said microcontroller.

In one or more embodiments, the battery unit is a battery module or a battery pack containing multiple battery modules.

In one or more embodiments, a vehicle comprises a battery system of the kind set forth.

In accordance with a second aspect of the present disclosure, a method of operating a secure element is conceived, comprising: coupling, through a seal interface included in the secure element, the secure element to a seal included in a battery system, wherein the seal is configured to physically protect a battery unit of the battery system; storing, by a storage unit included in the secure element, a reference value indicative of a closed state of the seal; monitoring, by a monitoring unit included in the secure element, an electrical characteristic of the seal and comparing said electrical characteristic of the seal with the reference value.

### DESCRIPTION OF DRAWINGS

Embodiments will be described in more detail with reference to the appended drawings.
Fig. 1A shows an illustrative embodiment of a secure element for use in a battery system.
Fig. 1B shows an illustrative embodiment of a battery system.
Fig. 2 shows an illustrative embodiment of a method of operating a secure element.
Fig. 3 shows an illustrative embodiment of a battery module.
Fig. 4 shows an illustrative embodiment of a battery system for use in an electric vehicle.

### DESCRIPTION OF EMBODIMENTS

As mentioned above, there may be a need to verify the integrity of battery packs or modules. Battery packs or modules are often physically protected against environmental influences, such exposures to salt and oil, by means of a seal. Furthermore, such a seal facilitates a proper repair and maintenance service of a battery pack or module, by enabling that the battery pack or module is opened and closed in a relatively secure manner. However, a seal is often not able to detect an unauthorized opening of the battery pack or module. As a result, the battery pack or module may not be adequately protected against physical manipulations. In such a case it might for example become easier to replace a battery pack or module with a cheap or fake pack or module. In particular, the battery of an electric vehicle is typically the most expensive part of a vehicle, and therefore very attractive for manipulation. More specifically, in terms of security, the state of health of a battery is comparable to the mileage counter of a combustion engine car. Thus, an attacker could manipulate the battery pack or module in such a way that an old, used one looks like a new one. Similarly, an attacker may replace an old, original battery pack or module with a new, but cheap or fake one.

Now discussed are a secure element and a corresponding method of operating a secure element, which facilitate detecting the unauthorized opening of a battery pack or module of the kind set forth.

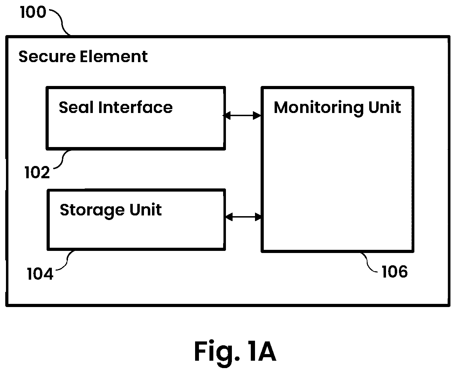

**Fig. 1A** shows an illustrative embodiment of a secure element 100 for use in a battery system. In particular, the secure element 100 comprises a seal interface 102, a storage unit 104 and a monitoring unit 106. The seal interface 102 is configured to couple the secure element 100 to a seal included in the battery system, wherein the seal is configured to physically protect a battery unit of the battery system. Furthermore, the storage unit 104 is configured to store a reference value indicative of a closed state of the seal. Furthermore, the monitoring unit 106 is configured to monitor an electrical characteristic of the seal and to compare said electrical characteristic of the seal with the reference value. In this way, the unauthorized opening of the battery unit may be detected more easily. In a practical implementation, the secure element 100 is implemented as a tamper-resistant integrated circuit. This tamper-resistant integrated circuit may have applications installed thereon, which have a prescribed functionality and a prescribed level of security. Furthermore, the secure element 100 may implement security functions, such as cryptographic functions and authentication functions. Thus, the reference value is stored in a secure manner, such that it cannot easily be retrieved by an attacker in an attempt to bypass the detection of the unauthorized opening of the battery unit. The skilled person will appreciate that, although the seal interface 102, the storage unit 104 and the monitoring unit 106 are shown as separate components of the secure element 100, some or all of these components may be integrated into a single physical unit of the secure element 100.

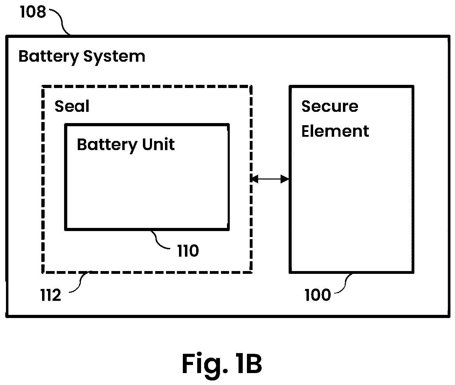

**Fig. 1B** shows an illustrative embodiment of a battery system 108 in which the presently disclosed secure element 100 is used. The battery system 108 comprises a battery unit 110 and a seal 112 configured to physically protect the battery unit 110. Furthermore, the battery system 108 comprises the secure element 100 shown in Fig. 1A, which is operatively coupled to the seal 112In a practical implementation, the battery unit 110 is a battery module or a battery pack containing multiple battery modules. Thus, in this way, the detection of unauthorized openings of battery modules or battery packs may easily be detected. The battery system 108 may for example be integrated into a vehicle.

In one or more embodiments, the electrical characteristic is an impedance of the seal. In this way, the detection of unauthorized openings of the battery unit is further facilitated. In particular, the impedance of the seal is a particularly suitable electrical characteristic, because it changes significantly when a seal is broken in an attempt to open the battery unit (i.e., when the seal transitions from the closed state to an opened state). In one or more embodiments, the monitoring unit is further configured to register a first attack on the seal if the electrical characteristic of the seal differs from the reference value by more than a predefined threshold. In this way, the detection of unauthorized openings of the battery unit is facilitated, while allowing some flexibility with regard to acceptable changes of the electrical characteristic of the seal (i.e., with regard to the fine-tuning of the detection).

In one or more embodiments, the monitoring unit is further configured to register a second attack on the seal if a power supply to the secure element is interrupted for more than a predefined amount of time. In this way, the detection of unauthorized openings of the battery unit is further facilitated. In particular, an interruption of the power supply to the secure element may increase the likelihood that an unauthorized opening of the battery unit has not been detected, because the secure element was not able to measure the electrical characteristic of the seal while it did not receive power. Therefore, by registering an attack also in case of a power supply interruption, a higher level of protection may be achieved. In one or more embodiments, the monitoring unit is further configured to unregister the second attack if a successful authentication has been performed towards the secure element. In this way, the battery unit's integrity status may easily be reset, for example by authorized maintenance personnel. In one or more embodiments, the storage unit is further configured to store, in response to the second attack having been unregistered, non-volatile data indicating that the second attack has been unregistered. In this way, the battery unit is no longer regarded as potentially manipulated after a power reset or at the start of a new power cycle, for example.

In one or more embodiments, the monitoring unit is further configured to learn the reference value during a training phase of the battery system before the reference value is stored in the storage unit.. In this way, the reliability of the detection of unauthorized openings may be increased. In one or more embodiments, the secure element further comprises a near field communication (NFC) interface for connecting the secure element to an external user device. The NFC interface facilitates performing a user authentication towards the secure element. Furthermore, in one or more embodiments, the seal interface comprises a first part coupled to a first end of the seal and a second part coupled to a second end of the seal, and the monitoring unit is configured to monitor the electrical characteristic of the seal by measuring currents on the first part and second part of the seal interface, wherein said currents are measured over shunt resistors. This results in a practical implementation, in which the electrical characteristic of the seal can easily be measured. Furthermore, in a practical implementation, the secure element is embedded within the battery unit. In one or more embodiments, the battery system further comprises a microcontroller, and the secure element comprises a wired interface for connecting the secure element to said microcontroller. The microcontroller facilitates performing a user authentication towards the secure element.

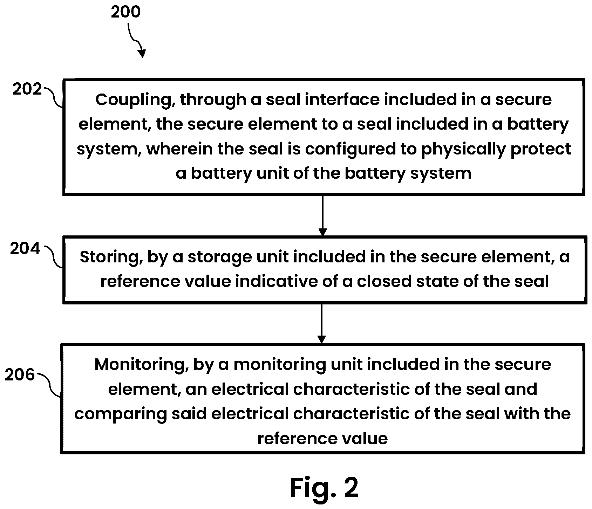

Fig. 2 shows an illustrative embodiment of a method 200 of operating a secure element. The method 200 comprises the following steps. At 202, a seal interface included in a secure element couples the secure element to a seal included in a battery system, wherein the seal is configured to physically protect a battery unit of the battery system. Furthermore, at 204, a storage unit included in the secure element stores a reference value indicative of a closed state of the seal. Furthermore, at 206, a monitoring unit included in the secure element monitors an electrical characteristic of the seal and compares said electrical characteristic of the seal with the reference value. As mentioned with reference to the corresponding secure element shown in Fig. 1, in this way, the unauthorized opening of the battery unit may be detected more easily.

In accordance with the present disclosure, a secure element is used in combination with a battery seal, in order to facilitate the detection of unauthorized attempts to open a battery unit. The presently disclosed operating method may colloquially be referred to as a "secure battery seal method", which may enable a trusted and authorized repair of battery packs or modules. Once a battery reaches a certain lifecycle stage, it may need to be repaired or reworked to extend the lifecycle. In such a case, the secure element may only allow authorized stakeholders to repair or rework the battery packs or modules. In this way, the safety of a battery system is enhanced. Furthermore, it may be ensured that only original equipment is installed, which may protect a business case of original equipment providers. The secure battery seal method may prevent an unauthorized access and manipulation of a battery module. It is noted that the manipulation of a battery module may be attractive for attackers, as a battery module is the most expensive part of an electrical vehicle. Furthermore, the secure element used in combination with the battery seal may also implement other security features, such as a secure battery passport function or a vehicle-access authentication function. Additionally, the presently disclosed battery system and operating method may establish trust in a re-used battery, and may be combined with other applications such as a secure battery management system (as described, for example, in the European patent application EP 4 403 407 A1).

More specifically, the secure element coupled to the battery seal may actively verify that the seal is not manipulated or destroyed. This may be done by repeatedly measuring an electrical characteristic of the seal, such as the seal impedance. In particular, the seal impedance may have a secure value, and every seal may be trained with a coupled secure element to ensure that no manipulation, such as bypassing the seal, can be carried out. Thus, only the secure element coupled to the seal may know its behavior. The skilled person will appreciate that the seal may be implemented in various ways. For example, the seal may be a protective cover of the battery unit, which as a whole has a given electrical characteristic, such as an impedance. Alternatively, the seal may be a metal strip which is integrated into a protective cover of the battery unit. In that case, said metal strip has a given electrical characteristic. Furthermore, the skilled person will appreciate that, instead or in addition to the impedance of the seal, other electrical characteristics of the seal may be monitored in order to detect its manipulation or destruction. Such other electrical characteristics may include a capacitance and an inductance of the seal.

Furthermore, the secure element may be constantly powered on. In that case, if the power is removed in an unauthorized manner, an attack may be registered. This attack may be securely stored in the secure element during the next successful boot event. Furthermore, in the case where a battery module would need to be opened (i.e., in a repair scenario), an authorization may be required prior to the opening. During this authorization process the information of power may be removed for the repair work and may be stored in a secure non-volatile memory (NVM) as a "secure power-on reset bit". During the next start event, the secure element may then read this information from the NVM and clear the secure power-on reset bit. This bit may be set during authorization to allow a power cycle. If this bit is not set, a power cycle may be seen as a potential manipulation of the battery module and consequently the usage of the battery module may be blocked.

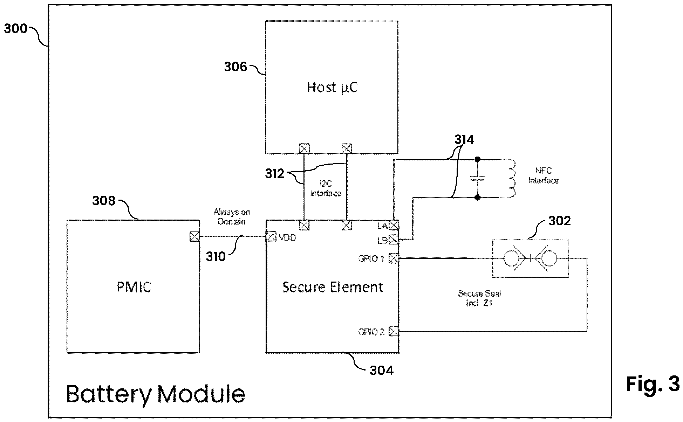

**Fig. 3** shows an illustrative embodiment of a battery module 300. The battery module 300 comprises a secure element 304 which is operatively coupled to a seal 302 having a predetermined impedance Z1. The battery module 300 is an example of a battery unit of the kind set forth. Although the seal 302 is schematically shown as forming part of the battery module 300, it may in practice, for example, be implemented as a protective package that covers the battery module 300. Furthermore, in this practical implementation, the secure element 304 is embedded within the battery module 300. In addition, the battery module 300 comprises a host microcontroller 306 coupled to the secure element 304 through an I2C interface 312. In addition, the battery module 300 comprises a power management integrated circuit (PMIC) operatively coupled to the secure element 304, wherein the PMIC 308 is configured to constantly supply power to the secure element 304, such that an always-on domain 310 is realized. Furthermore, the battery module 300 comprises an NFC interface 314 configured to enable near field communication with an external user device (not shown).

In this embodiment, the secure element 304 is supplied by the always-on domain 310 of the battery module 300. This may ensure that the secure element 304 is always supplied, also in a low-energy state or in a very low-energy state, because there is still enough energy remaining in the battery module 300 to ensure that the secure element 304 remains active. The secure element 304 may also use a very low-power mode while actively checking if the seal 302 is still closed. The secure element 304 is connected to the host microcontroller 306 via the I2C interface 312. Alternatively, the secure element 304 may be connected to the host microcontroller 306 via another wired interface. The secure seal 302 has an individual impedance (Z1) which is only known to the secure element 304, which has been trained during a training phase.

In the embodiment shown in Fig. 3, a simple method such as measuring continuously the current at GPIO1 and GPIO2 over shunt resistors may for example be used to monitor the integrity of the seal 302. The GPIO1 shunt R, the secure seal R and GPIO2 shunt R may be high impedance values to ensure a low power consumption. Furthermore, the current I_{GPIO1_R} may be compared to the current I_{GPIO2_R} as an additional attack countermeasure. If the current I_{GPIO1_R} does not match the current I_{GPIO2_R} or the current I_{SecureSeal_R} corresponding to the expected impedance Z1, then an attack may be logged. Furthermore, if the current I_{GPIO2_R} does not match the current I_{SecureSeal_R}, then an attack may be logged. The logged attack information may then be checked at the latest during a power-on cycle of the battery module 300 by the host microcontroller 306.

In case of an electric vehicle, a so-called body control module (BMC) may function as a host microcontroller. In that case, the battery module 300 does not need to have its own microcontroller. Alternatively, the host microcontroller 306 may be connected to the BMC of the vehicle. In case of maintenance or repair, which requires the opening of the battery module 300 and the disconnection of the seal 302 and/or a powering off of the secure element 304, an authentication may have to be performed beforehand. Furthermore, data indicative of a successful authentication (e.g., a secure power-on reset bit) may have to be provided to the secure element 304 through the host microcontroller 306 or through the NFC interface 314.

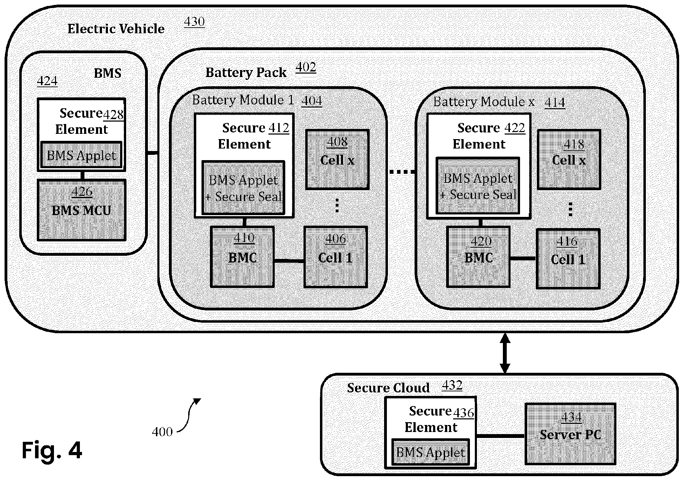

Fig. 4 shows an illustrative embodiment of a battery system 400 for use in an electric vehicle 430. The system 400 comprises a battery pack 402 that includes a plurality of battery modules 404, 414. Each battery module 404, 414 contains a plurality of battery cells 406, 408, 416, 418 coupled to a battery module controller 410, 420. Furthermore, in accordance with the present disclosure, the battery modules 404, 414 contain a secure element 412, 422 operatively coupled to the battery module controller 410, 422, wherein said secure element 412, 422 is configured to repeatedly measure (i.e., to monitor) an electrical characteristic of a seal that protects the respective battery modules 404, 414, and to compare said electrical characteristic of the seal with a reference value. Furthermore, the system 400 comprises a battery management system (BMS) 424 coupled to the battery modules 404, 414. The battery management system 424 contains a microcontroller 426 and a secure element 428. Finally, the battery system 400 contains a secure cloud 432 operatively coupled to the battery system components integrated into the electric vehicle 430. The secure cloud 432 comprises a server personal computer (server PC) 434 and a secure element 436. In addition to verifying the integrity of the seal, the secure elements 412, 422 may perform typical authentication operations by executing a cryptographic algorithm. To this end, applets are provided in the secure elements 412, 422. Furthermore, the secure elements 412, 422 may have been provisioned with cryptographic keys and/or cryptographic certificates, which may be used as input to the cryptographic algorithms coded in the applets. The secure cloud 432 may be used to establish a secure end-to-end communication with the secure element 428 in the BMS 424. In addition, dynamic battery data may be made accessible by synchronizing the BMS 424 with the secure cloud 432. This may be needed, for example, to meet battery passport regulations in the European Union or other jurisdictions.

It is noted that the embodiments above have been described with reference to different subject-matters. **In** particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. **In** different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: secure element
- 102: seal interface
- 104: storage unit
- 106: monitoring unit
- 108: battery system
- 110: battery unit
- 112: seal
- 200: method of operating a secure element
- 202: coupling, through a seal interface included in a secure element, the secure element to a seal included in a battery system, wherein the seal is configured to physically protect a battery unit of the battery system
- 204: storing, by a storage unit included in the secure element, a reference value indicative of a closed state of the seal
- 206: monitoring, by a monitoring unit included in the secure element, an electrical characteristic of the seal and comparing said electrical characteristic of the seal with the reference value
- 300: battery module
- 302: secure seal including Z1
- 304: secure element
- 306: host microcontroller
- 308: power management integrated circuit (PMIC)
- 310: always-on domain
- 312: I2C interface
- 314: NFC interface
- 400: battery system for use in an electric vehicle
- 402: battery pack
- 404: battery module 1
- 406: cell 1
- 408: cell x
- 410: battery module controller (BMC)
- 412: secure element
- 414: battery module x
- 416: cell 1
- 418: cell x
- 420: battery module controller (BMC)
- 422: secure element
- 424: battery management system (BMS)
- 426: BMS microcontroller (BMS MCU)
- 428: secure element
- 430: electric vehicle
- 432: secure cloud
- 434: server personal computer (server PC)
- 436: secure element

## Claims

1. A secure element for use in a battery system, the secure element comprising:
a seal interface configured to couple the secure element to a seal included in the battery system, wherein the seal is configured to physically protect a battery unit of the battery system;
a storage unit configured to store a reference value indicative of a closed state of the seal;
a monitoring unit configured to monitor an electrical characteristic of the seal and to compare said electrical characteristic of the seal with the reference value.

2. The secure element of claim 1, wherein the electrical characteristic is an impedance of the seal.

3. The secure element of claim 1 or 2, wherein the monitoring unit is further configured to register a first attack on the seal if the electrical characteristic of the seal differs from the reference value by more than a predefined threshold.

4. The secure element of any preceding claim, wherein the monitoring unit is further configured to register a second attack on the seal if a power supply to the secure element is interrupted for more than a predefined amount of time.

5. The battery system of claim 4, wherein the monitoring unit is further configured to unregister the second attack if a successful authentication has been performed towards the secure element.

6. The secure element of claim 5, wherein the storage unit is further configured to store, in response to the second attack having been unregistered, non-volatile data indicating that the second attack has been unregistered.

7. The secure element of any preceding claim, wherein the monitoring unit is further configured to leam the reference value during a training phase of the battery system before the reference value is stored in the storage unit.

8. The secure element of any preceding claim, further comprising a near field communication, NFC, interface for connecting the secure element to an external user device.

9. The secure element of any preceding claim, wherein the seal interface comprises a first part coupled to a first end of the seal and a second part coupled to a second end of the seal, and wherein the monitoring unit is configured to monitor the electrical characteristic of the seal by measuring currents on the first part and second part of the seal interface, wherein said currents are measured over shunt resistors.

10. The secure element of any preceding claim, being implemented as a tamper-resistant integrated circuit.

11. The secure element of any preceding claim, being embedded within the battery unit of the battery system.

12. A battery system comprising the secure element of any preceding claim, the seal and the battery unit, wherein the battery system further comprises a microcontroller, and wherein the secure element comprises a wired interface for connecting the secure element to said microcontroller.

13. The battery system of claim 12, wherein the battery unit is a battery module or a battery pack containing multiple battery modules.

14. A vehicle comprising the battery system of claim 12 or 13.

15. A method of operating a secure element, comprising:
coupling, through a seal interface included in the secure element, the secure element to a seal included in a battery system, wherein the seal is configured to physically protect a battery unit of the battery system;
storing, by a storage unit included in the secure element, a reference value indicative of a closed state of the seal;
monitoring, by a monitoring unit included in the secure element, an electrical characteristic of the seal and comparing said electrical characteristic of the seal with the reference value.

## Amended claims

### Amended claims in accordance with Rule 137(2) EPC.

1. A battery system comprising a battery unit, a seal configured to physically protect the battery unit, and a secure element implemented as a tamper-resistant integrated circuit, the secure element comprising:
a seal interface configured to couple the secure element to the seal;
a storage unit configured to store a reference value indicative of a closed state of the seal;
a monitoring unit configured to monitor an electrical characteristic of the seal and to compare said electrical characteristic of the seal with the reference value.

2. The battery system of claim 1, wherein the electrical characteristic is an impedance of the seal.

3. The battery system of claim 1 or 2, wherein the monitoring unit is further configured to register a first attack on the seal if the electrical characteristic of the seal differs from the reference value by more than a predefined threshold.

4. The battery system of any preceding claim, wherein the monitoring unit is further configured to register a second attack on the seal if a power supply to the secure element is interrupted for more than a predefined amount of time.

5. The battery system of claim 4, wherein the monitoring unit is further configured to unregister the second attack if a successful authentication has been performed towards the secure element.

6. The battery system of claim 5, wherein the storage unit is further configured to store, in response to the second attack having been unregistered, non-volatile data indicating that the second attack has been unregistered.

7. The battery system of any preceding claim, wherein the monitoring unit is further configured to learn the reference value during a training phase of the battery system before the reference value is stored in the storage unit.

8. The battery system of any preceding claim, further comprising a near field communication, NFC, interface for connecting the secure element to an external user device.

9. The battery system of any preceding claim, wherein the seal interface comprises a first part coupled to a first end of the seal and a second part coupled to a second end of the seal, and wherein the monitoring unit is configured to monitor the electrical characteristic of the seal by measuring currents on the first part and second part of the seal interface, wherein said currents are measured over shunt resistors.

10. The battery system of any preceding claim, wherein the battery unit comprises the secure element.

11. The battery system of any preceding claim, further comprising a microcontroller, wherein the secure element comprises a wired interface for connecting the secure element to said microcontroller.

12. The battery system of any preceding claim, wherein the battery unit is a battery module or a battery pack containing multiple battery modules.

13. A vehicle comprising the battery system of any preceding claim.

14. A method of operating a battery system, said battery system comprising a battery unit, a seal configured to physically protect the battery unit, and a secure element implemented as a tamper-resistant integrated circuit, the method comprising:
coupling, through a seal interface included in the secure element, the secure element to the seal;
storing, by a storage unit included in the secure element, a reference value indicative of a closed state of the seal;
monitoring, by a monitoring unit included in the secure element, an electrical characteristic of the seal and comparing said electrical characteristic of the seal with the reference value.
